# EUROPÄISCHE PATENTSCHRIFT

(11) **EP 0 897 249 B1**
(45) Veröffentlichungstag und Bekanntmachung des Hinweises auf die Patenterteilung: **29.12.2004**
(21) Anmeldenummer: 98113158.4
(22) Anmeldetag: 15.07.1998
(51) Int. Cl.: H04Q 7/22, H04M 3/42

(54) **Verfahren und System zur mobilen Nutzung von Online-Diensten**
Method and system for mobile use of online services
Procédé et système pour l'utilisation mobile des services en ligne

(30) Priorität: 14.08.1997 DE 19735191
(43) Veröffentlichungstag der Anmeldung: 17.02.1999
(73) Patentinhaber: Deutsche Telekom AG, 53113 Bonn (DE)
(72) Erfinder: Bockmann, Ulrich, Ing.-grad., 53119 Bonn (DE); Weiss, Klaus Bernd, Dipl.-Ing., 53129 Bonn (DE)

(56) Entgegenhaltungen:
- WO-A-95/21509
- WO-A-96/35300
- WO-A-97/14244
- WO-A-97/16933
- CHAKRABORTY S: "DATA INTERWORKING WITH GSM" PROCEEDINGS OF THE NORDIC SEMINAR ON DIGITAL MOBILE RADIO COMMUNICATIONS,FI,HELSINKI, TELECOM FINLAND, Bd. SEMINAR 5, 1. Dezember 1992 (1992-12-01), Seiten 389-395, XP000458679

## Beschreibung

Die Erfindung betrifft ein Verfahren und ein System zur mobilen Nutzung von Online-Diensten nach dem Oberbegriff des Patentanspruchs 1 bzw. des Patentanspruchs 5.

Aus der EP 0 797 342 ist ein Telekommunikationsnetz bekannt, das aus einem Festnetz und einem mobilen Netz besteht. In einem derartigen Telekommunikationsnetzwerk kann ein Client über einen Server auf Datenbanken zugreifen.

Online-Dienste sind grundsätzlich bekannt, wie zum Beispiel der T-Online-Dienst der Deutschen Telekom AG, der auf dem früheren BTX-Online-Dienst aufbaut. Über den T-Online-Dienst besteht ein direkter Zugang zum Internet-System. Mit Hilfe für T-Online geeigneter, ortsgebundener Endeinrichtungen, wie zum Beispiel multifunktionale Telefone mit integriertem T-Online-Decoder, ISDN-Basisanschluß plus PC mit ISDN-Karte plus T-Online-Software, analoger Telefonanschluß plus PC mit geeigneter Software plus Modem mit T-Online-Decoder, kann sich der Kunde über eine Zugangsnummer, wie zum Beispiel die bekannte 01910 plus Anschlußkennung, in das T-Online-System einwählen. Die Verbindung wird dann zum Zwecke der Datenübertragung, zum Beispiel Senden und Empfangen von Informationen, Abruf von Online-Daten aller Art, über ein Festnetz und den T-Online-Zugang aufgebaut. Es ist außerdem bekannt, daß man mit Hilfe von Mobilfunkendgeräten, wie zum Beispiel Handys und Pagern, Daten mit informativem Charakter, allerdings bei gegrenztem Leistungsumfang, senden bzw. empfangen kann. Es existieren bereits eine Reihe von Pagern, zum Beispiel Produkte der Firma T-Mobil, die zur Abfrage regionaler/überregionaler Angebote genutzt werden. Die mögliche Informationsauswahl ist jedoch stark begrenzt. Diese Geräte und Verfahren sind beschrieben in:
- Telekom, der Katalog; Seite 94,95: T-Online;
- T-Online-Seiten 1046500a und 104650a;
- Internetseitenauswahl von T-Mobil GmbH, Homepage, Startseite zu Funkrufdiensten, D1-Alpha-Service; und
- Online-Magazin COM, Heft 8/97.

Im Zusammenhang mit der Nutzung des D-Netzes werden unter anderem durch T-Mobil (das bekannte D1-Netz) spezifische Leistungsmerkmale angeboten, die dem D-Netz-Benutzer Informationen verfügbar machen, zum Beispiel Vekehrsinfo, Pannenhilfe und so weiter. Diese Informationen unterliegen somit einer speziellen Ausprägung. Einen umfassenden Zugang zu Informationen, wie zum Beispiel Datenbanken aller Art, haben die D-Netz-Kunden zur Zeit nicht, weil bisher kein praktikables Verfahren bzw. ein praktikables System für diesen Zweck geschaffen wurde.

Ferner ist die Nutzung von T-Online-Diensten mittels eines Handys (D-Netz; GSM als Luftschnittstelle) und zusätzlich einer Endeinrichtung mit IV-spezifischen Merkmalen, zum Beispiel LapTop, bereits heute prinzipiell möglich. Da hierzu ein Handy mit einem Modem für die Datenübertragung benötigt wird und das außerdem mit einem mit T-Online geeigneter Software ausgestattetem LapTop verbunden sein muß, ist diese Kombination äußerst unhandlich und von geringem Nutzwert.

Außerdem hat sich in den letzten Jahren der Mobilfunksektor zum Massenmarkt entwickelt. Handys gehören als mobilitätsunterstützendes Kommunikationsmittel, insbesondere im Geschäftsleben, zum Alltagsbild. Die Mobilfunknetzbetreiber haben für die Luftschnittstelle den sogenannten GSM-Standard weltweit realisiert, so daß zwischen den verschiedenen GSM-Netzbetreibern globale mobile Kommunikation möglich ist, sofern jeweils Roaming-Abkommen bestehen. Auch eine derartige globale mobile Kommunikation hat jedoch auch heute noch für den Kunden den Nachteil, daß er zwar praktisch ungehindert telefonieren kann, jedoch mit seinem mobilen Endgerät Informationen und Daten aller Art von bestehenden Datenbanken aus Festnetzen nicht empfangen bzw. abrufen kann und sie auch nicht dorthin absenden kann.

Der Erfindung liegt deshalb die Aufgabe zugrunde, ein Verfahren und ein System zur mobilen Nutzung von Online-Diensten zu schaffen, wodurch nicht nur ein mobiles Telefonieren, sondern auch ein mobiler Zugriff auf bestehende Datenbanken und sonstige Informationen sowie ein Absenden und Empfangen von Informationen und Daten in/von Festnetze(n) möglich wird, und wodurch Informationen, die zum Beispiel der T-Online-Dienst in seinen Datenbanken und über den Internet-Zugang bereitstellt, zielgerichtet für das mobile Anforderungsprofil reisender Kunden nutzbar gemacht werden.

Die erfindungsgemäße Lösung der Aufgabe für das Verfahren ist im Kennzeichen des Patentanspruchs 1 charakterisiert.

Weitere Lösungen für das Verfahren sind in den Kennzeichen der Patentansprüche 2 bis 4 charakterisiert.

Die Lösung für das System zur Durchführung des Verfahrens ist im Kennzeichen des Patentanspruchs 5 charakterisiert.

Weitere Ausgestaltungen bzw. Lösungen sind in den Patentansprüchen 6 und 9 angegeben.

Dadurch, daß mobile Endgeräte mit GSM-Luftschnittstelle ausgerüstet sind und über ein integriertes Modem zur Datenübertragung geeignet sind, weiterhin über ein entsprechend dimensioniertes Display und eine entsprechend erweiterte Tastatur verfügen, außerdem die (T-)Online-Software aufnehmen können und/oder über einen integrierten (T-)Online-Decoder verfügen, ist es durch diese multidisplayfunktionalen Handys mit erweiterten Tastaturfunktionalitäten möglich, erstmals eine volle mobile Nutzung von Online-Diensten zu ermöglichen. Damit ist es unter anderem möglich, in entsprechend strukturierte Datenbanken ohne weiteres über ein Mobiltelefon zuzugreifen und auf Fahrpläne aller Art, Flughafeninfos, Flugpläne, Taxibestellung, Mietwagenreservierung, Hotelinformationen, Hotelbuchungen, Börseninformationen, Wirtschaftsinformationen, spezielle Städte- oder Länderinformationen, Touristeninformationen, Messeinformationen, spezielle Einkaufshinweise, Mailing, Short Message Services (SMS) und anderes. Weiterhin weist die Lösung den Vorteil auf, daß die Nachteile, die sich bei den bekannten Paging-Lösungen einstellen, nämlich zum Beispiel begrenzte Information, die man speziell buchen muß, überwunden werden. Außerdem können derartig ausgerüstete Kunden eines Netzbetreibers bzw. eines Mobilfunkbetreibers weltweit auf strukturierte, zum Beispiel T-Online-Mobil-Datenbanken und auf andere Datenbanken über das Internet zugreifen.

Die Erfindung wird nun anhand eines in der Zeichnung dargestellten Ausführungsbeispiels, ausgehend vom derzeitigen Stand der Technik, näher erklärt.

In der Zeichnung bedeuten:
- Fig. 1: ein bekanntes Festnetz mit Endgeräten und Zugriffsmöglichkeiten zu Datenbanken des T-Online-Dienstes und
- Fig. 2: ein System mit Festnetz und Mobilnetz und angeschlossenen Endgeräten zum Zugriff auf Online- und Online-Mobil-Dienste.

In den Figuren, in den Patentansprüchen, der Beschreibung und in der Zusammenfassung sind gleiche Teile mit gleichen Bezugszeichen bezeichnet, die in der hinten anhängenden Liste der Bezugszeichen angegeben sind.

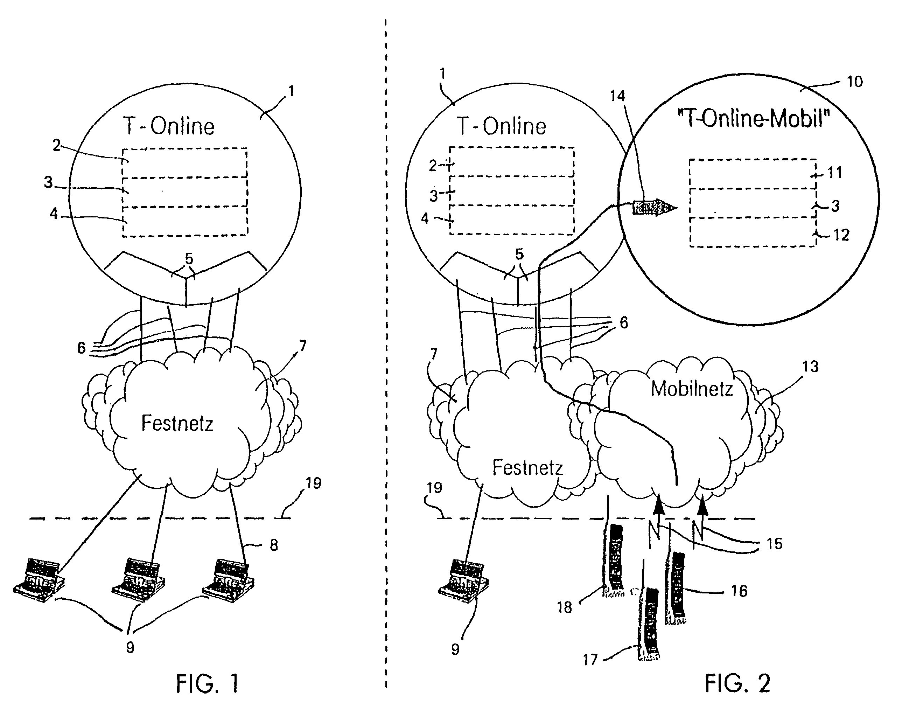

In Fig. 1 ist das heute bereits auf dem Markt befindliche T-Online-Dienste-System dargestellt. Der T-Online-Dienst 1 stellt zum Beispiel Datenbanken 2 oder auch über Internet 3 Datenbankinformationen bereit. Weitere mögliche Dienste 4 sind im T-Online-Dienst 1 dargestellt. Die T-Online-Dienste sind mit dem vorhandenen Festnetz 7 über Leitungen 6 und Modems 5 gekoppelt. Über Leitungen 8 sind an das Festnetz 7 für T-Online geeignete ortsgebundene Endeinrichtungen 9 vorhanden. Dies sind zum Beispiel multifunktionale Telefone mit integrierten T-Online-Decoder, ISDN-Basisanschluß plus PC mit ISDN-Karte plus T-Online-Software, analoger Telefonanschluß plus PC mit geeigneter Software plus Modem mit T-Online-Decoder. Der Kunde wählt sich über eine Zugangsnummer, zum Beispiel 01910 plus Anschlußkennung in den T-Online-Dienst 1 ein. Die Verbindung wird dann zum Zweck der Datenübertragung, nämlich senden und empfangen von Informationen, Abruf von Online-Daten aller Art über das Festnetz 7 und den T-Online-Zugang über die Leitungen 6 und die Modems 5 aufgebaut. Die gestrichelt eingezeichnete Linie 19 stellt die symbolische Trennlinie Kunden/Netze/Dienste dar.

In Fig. 2 ist hingegen ein neuartiges, gekoppeltes System dargestellt, daß es ermöglicht, daß speziell ausgerüstete mobile Endgeräte, wie multidisplayfunktionale Handys 16, Handys 17 mit Modem und gegebenenfalls T-Online-Mobilfsoftware, Handys 18 für Short Message Funktionalität (SMS) über ein Festnetz 7 mit angeschlossenen Endgeräten 9 und über Leitungen 6 und Modems 5 Zugriff zum Beispiel zu dem T-Online-Dienst 1 und dem T-Online-Mobildienst 10 haben. Mit Hilfe dieser für die T-Online-Nutzung spezifizierten mobilen Endeinrichtungen 16, 17 und 18 kann sich ein Kunde über das Mobilfunknetz 13 in den T-Online-Dienst 1 mit seinen Datenbanken 2, Internet-Diensten 3 und weiteren Diensten 4 für T-Online einwählen. Außerdem haben die genannten Endeinrichtungen 16, 17 und 18 über die Verbindung 14 selbstverständlich auch Zugriff auf die Datenbanken 11, die Internetdienste 3 und den Short Message Service (SMS) 12 des T-Online-Mobildienstes 10 Zugriff. Um mit Hilfe dieser für die T-Online-Nutzung spezifizierten mobilen Endeinrichtungen 16, 17 und 18 den Zugang zu realisieren, ist eine geeignete Zugangsprozedur zu installieren, damit das T-Online-System das mobile Anforderungsprofil der sich einzuwählenden Kunden erkennt. Behält man die 01910 für die Einwahl in das T-Online-System, wie bekannt bei, dann ist die 01910 plus einer "Anschlußkennung mobil" als Identifikationsmerkmal für den mobilen Kunden ausreichend. Über die zitierten Zugangsnummern, wie zum Beispiel 01910 plus Anschlußkennung mobil kann zum Beispiel ein T-Online-Mobilservice zudem leistungsgerecht tarifiert werden, wie zum Beispiel Flat Rate plus leistungsabhängige Tarifierung für die Dienstenutzung. Es ist zu bemerken, daß dabei die T-Online-Datenbanken inklusive des Internet derart strukturiert sind, daß zum Beispiel die Bedürfnisse reisender Kunden erfüllt werden können. Der reisende (mobile) Kunde soll den für seine speziellen Bedürfnisse strukturierten "elektronischen Marktplatz" der Diensteanbieter unabhängig von seinem jeweiligen Standort, von jedem Ort aus weltweit nutzen können. Dementsprechend ist ein speziell auf die Bedürfnisse eines Reisenden zugeschnittener, maßgeschneiderter Online-Dienst, zum Beispiel T-Online-Dienst, bereitzustellen, das heißt die Datenbank 2 ist ensprechend zu strukturieren. Es wird dafür das folgende Beispiel angegeben: Fahrpläne aller Art (Bahn, Nahverkehr, Flugpläne), Flughafeninfos, Tarifbestellung, Mietwagenreservierung, Flugzeugbuchung, Hotelinformationen, Hotelbuchungen, Börseninformationen, Wirtschaftsinformationen, spezielle Städteinformationen, Touristeninformationen, Messehinweise, Einkaufshinweise, Mailing, Short Message Services (SMS) und anderes. Das System als solches besteht aus den Komponenten multi(display)funktionale Handys, auch Mobil Personal Assistant genannt, oder Handys mit Short Message Funktionalität plus T-Online für mobile Bedürfnisse strukturiert.

Aus der Tatsache, daß weltweit bereits eine Vielzahl von Roaming-Abkommen verschiedener GSM-Netzbetreiber existieren, ergibt sich, daß durch das vorliegende Verfahren bzw. System der Vorteil eintritt, daß Kunden mit den beschriebenen mobilen Endeinrichtungen 16, 17 und 18, aber auch mit den Endeinrichtungen 9 eines Festnetzes 7 weltweit auf die strukturierte Datenbank, zum Beispiel T-Online-Mobil-Datenbank 11 und dem Angebot im Internet 3, zugreifen können. Das bedeutet, das Kunden anderer Mobilfunknetzbetreiber auch den T-Online-Mobildienst 10 nutzen können. Auch in der Fig. 2 stellt wieder die gestrichelte Linie 19 die symbolische Trennlinie Kunden/Netze/Dienste dar. Die in Fig. 2 eingezeichnete Verbindung 14 soll zeigen, daß die Endgeräte 16, 17 und 18 über das Mobilfunknetz 13 auch direkt auf die T-Online-Mobildienste 10 zugreifen können.

### Liste der verwendeten Bezugszeichen und Begriffe:

- 1: Online-Dienst (T-Online)
- 2: Datenbank (T-Online)
- 3: Internet
- 4: weitere Dienste (T-Online)
- 5: Modem
- 6: Leitungen
- 7: Festnetz
- 8: Leitungen
- 9: Endgeräte für T-Online
- 10: Online-Mobildienst
- 11: Datenbank
- 12: Short Message Service (SMS)
- 13: Mobilnetz
- 14: Verbindung
- 15: Zugang
- 16: multidisplayfunktionale Handys
- 17: Handys mit Modem
- 18: Handys für SMS
- 19: symbolische Trennlinie Kunden/Netze/Dienste

## Patentansprüche

1. Verfahren zur mobilen Nutzung von Online-Diensten eines Festnetzes und Online-Mobildiensten eines Mobilnetzes mit Endgeräten von Festnetzen und Endgeräten von Mobilnetzen, **dadurch gekennzeichnet, dass** ein multifunktionales Display aufweisende Endgeräte (16), Handys mit Modem (17) und Handys für SMS (18) des Mobilnetzes (13) über einen Zugang (15) plus einer Anschlusskennung als Identifikationsmerkmal für den mobilen Kunden mit einem System zur Nutzung von Online-Diensten verbunden werden, und dass dieses System das mobile Anforderungsprofil des sich verbindenden Kunden durch entsprechend installierte Verbindungsprozeduren erkennt, dass danach das gewünschte Senden und Empfangen von Informationen erfolgt und Zugriff zu Online-Datenbanken aller Art über das Festnetz (7) und den Online-Zugang automatisch aufgebaut wird.

2. Verfahren nach dem Oberbegriff des Patentanspruches 1, **dadurch gekennzeichnet, dass** das Verbinden mit dem jeweiligen Online-Dienst über eine Verbindungsprozedur erfolgt, die über multifunktionale Telefone mit integriertem Online-Decoder oder ISDN-Basisanschluss plus PC mit ISDN-Karte plus Online-Software oder über einen analogen Telefonanschluss plus PC mit entsprechender Software und einem Modem mit Online-Decoder an das Fest- und/oder Mobilnetz (7 bzw. 13) abgegeben werden.

3. Verfahren nach einem der Patentansprüche 1 oder 2, **dadurch gekennzeichnet, dass** die Dienstenutzungen dezidierte Zugangsnummer plus Anschlusskennung als Identifikationsmerkmal dynamisch tarifiert werden.

4. Verfahren nach einem der Patentansprüche 1 bis 3, **dadurch gekennzeichnet, dass** Benutzer unterschiedlicher Mobilfunknetzbetreiber auf die Online-Mobil-Datenbanken und Online-Datenbanken (11 bzw. 2) und auf das Angebot im Internet (3) des Online- und des Online-Mobil-Dienstes (1 bzw. 10) zugreifen können.

5. System zur Nutzung von Online-Diensten (1) umfassend ein Festnetz (7) und Endgeräte (9, 16 bis 18) zur Durchführung des Verfahrens nach einem der vorangehenden Patentansprüche 1 bis 4, wobei ein Mobilnetz vorgesehen ist, wobei die Endgeräte als mobile Endgeräte ausgebildet sind und dass Endgeräte (9) des Festnetzes (7) und mobile, mit erweiterten Tastaturfunktionalitäten ausgerüstete und ein multifunktionales Display aufweisende Endgeräte (16 bis 18) des Mobilnetzes (13) über das Festnetz (7) und das Mobilnetz (13) sowie über Leitungen (6) bzw. über eine Verbindung (14) mit dem Online-Dienst (11) bzw. dem Online-Mobildienst (10) verbunden sind, **dadurch gekennzeichnet, dass** Mittel zum Erkennen des mobilen Anforderungsprofils des sich verbindenden Kunden durch entsprechend installierte Verbindungsprozeduren vorhanden sind.

6. System nach Patentanspruch 5, **dadurch gekennzeichnet, dass** die Endgeräte (9) des Festnetzes (7) als Endgeräte für Online-Dienste ausgerüstet sind.

7. System nach Patentanspruch 5, **dadurch gekennzeichnet, dass** die Endeinrichtungen (16 bis 18) des Mobilnetzes (13) als ein multifunktionales Display aufweisende Endgeräte (16) mit integriertem Modem (17), integrierter Online-Software und integrierten Online-Decoder und erweiterter Tastatur oder Modems für Short Message Service (18) mit Online-Software und -Decoder ausgebildet sind.

8. System nach einem der Patentansprüche 5 bis 7, **dadurch gekennzeichnet, dass** die Online-Dienste (1) Datenbanken (2) und Zugänge zum Internet (3) sowie Zugriffs- bzw. Speichermöglichkeiten für weitere Dienste (4) aufweisen und dass der Online-Mobildienst (10) strukturierte Datenbanken (11), Internetzugänge (3) und Short Message Dienste (SMS) (12) enthält.

9. System nach einem der Patentansprüche 5 bis 8, **dadurch gekennzeichnet, dass** es aus den Komponenten ein multifunktionales Display aufweisende Endgeräte (16) oder Handy mit Short Message Funktionalität (18) plus Online-Dienste (1) für mobile Bedürfnisse strukturiert, besteht.

## Claims

1. Method for the mobile use of online services of a fixed network and of online mobile services of a mobile network with terminal devices of fixed networks and terminal devices of mobile networks, **characterized in that** terminal devices (16) having a multifunctional display, mobile phones with modem (17) and mobile phones for SMS (18) of the mobile network (13) are connected via an access point (15) plus a terminal ID as identification feature for the mobile customer to a system for the use of online services, and **in that** said system detects the mobile requirement profile of the connecting customer through correspondingly installed connection procedures, **in that** thereafter the desired sending and receiving of information takes place and access to all manner of online databases is automatically set up via the fixed network (7) and the online access point.

2. Method according to the preamble of claim 1, **characterized in that** the connection to the respective online service is accomplished via a connection procedure delivered to the fixed and/or mobile network (7/13) via multifunctional telephones with integrated online decoder or ISDN basic rate interface plus PC with ISDN card plus online software or via an analog telephone line plus PC with corresponding software and a modem with online decoder.

3. Method according to any one of claims 1 or 2, **characterized in that** the service usages firm access number plus terminal ID are dynamically charged as identification feature.

4. Method according to any one of claims 1 to 3, **characterized in that** users of different mobile radio network operators are able to access the online mobile databases and online databases (11 and 2) and the offering in the Internet (3) of the online and online mobile services (1 and 10).

5. System for the use of online services (1) comprising a fixed network (7) and terminal devices (9, 16 to 18) for implementation of the method according to any one of preceding claims 1 to 4, a mobile network being provided, the terminal devices being in the form of mobile terminal devices, wherein terminal devices (9) of the fixed network (7) and mobile terminal devices (16 to 18) of the mobile network (13) - said mobile terminal devices (16 to 18) being provided with extended keypad functionalities and having a multifunctional display - are connected via the fixed network (7) and the mobile network (13) as well as via lines (6) or via a connection (14) to the online service (11) or the online mobile service (10), **characterized in that** means are provided for detecting the mobile requirement profile of the connecting customer through correspondingly installed connection procedures.

6. System according to claim 5, **characterized in that** the terminal devices (9) of the fixed network (7) are equipped as terminal devices for online services.

7. System according to claim 5, **characterized in that** the terminal devices (16 to 18) of the mobile network (13) are in the form of terminal devices (16) having a multifunctional display and being provided with integrated modem (17), integrated online software and integrated online decoder and extended keypad or modems for Short Message Service (18) with online software and decoder.

8. System according to any one of claims 5 to 7, **characterized in that** the online services (1) have databases (2) and access points to the Internet (3) as well as access and/or storage possibilities for further services (4) and **in that** the online mobile service (10) contains structured databases (11), Internet access points (3) and Short Message Services (SMS) (12).

9. System according to any one of claims 5 to 8, **characterized in that** said system consists of the components terminal devices (16) having a multifunctional display or mobile phone with Short Message functionality (18) plus online services (1) structured for mobile needs.

## Revendications

1. Procédé d'utilisation mobile de services en ligne d'un réseau fixe et de services mobiles en ligne d'un réseau mobile avec des équipements terminaux de réseaux fixes et des équipements terminaux de réseaux mobiles, **caractérisé en ce que** des équipements terminaux comprenant un écran d'affichage multifonctionnel (16), des portables avec modem (17) et des portables pour SMS (18) du réseau mobile (13) sont reliés par un accès (15) plus une identification d'accès pour identifier le client mobile à un système permettant l'utilisation de services en ligne et **en ce que** ce système reconnaît le profil d'exigence mobile du client se connectant grâce à des procédures de connexion installées à cet effet, **en ce que** s'effectuent ensuite l'émission et la réception voulues d'informations et qu'un accès est établi automatiquement via le réseau fixe (7) et l'accès en ligne vers des banques de données en ligne de tout type.

2. Procédé selon le préambule de la revendication 1, **caractérisé en ce que** la connexion avec le service en ligne correspondant est effectuée à l'aide d'une procédure de connexion délivrée au réseau mobile et/ou fixe (7 ou 13, respectivement) par des téléphones multifonctionnels avec décodeur en ligne intégré ou accès de base RNIS plus PC avec carte RNIS plus logiciel en ligne ou par une ligne téléphonique analogique plus PC avec logiciel correspondant et un modem avec décodeur en ligne.

3. Procédé selon l'une des revendications 1 ou 2, **caractérisé en ce que** les utilisations de services numéro d'accès dédié plus identification d'accès sont tarifées dynamiquement comme paramètre d'identification.

4. Procédé selon l'une des revendications 1 à 3, **caractérisé en ce que** des usagers de différents opérateurs de réseaux mobiles peuvent accéder aux banques de données mobiles en ligne et aux banques de données en ligne (11 ou 2, respectivement) et à l'offre Internet (3) du service en ligne et du service mobile en ligne (1 ou 10, respectivement).

5. Système d'utilisation de services en ligne (1) comprenant un réseau fixe (7) et des équipements terminaux (9, 16 à 18) pour implémentation du procédé selon l'une des revendications précédentes 1 à 4, tel qu'un réseau mobile est prévu, que les équipements terminaux sont configurés comme équipements terminaux mobiles et que des équipements terminaux (9) du réseau fixe (7) et des équipements terminaux mobiles (16 à 18) du réseau mobile (13) dotés de fonctionnalités de clavier élargies et présentant un écran d'affichage multifonctionnel sont reliés au service en ligne (11) ou au service mobile en ligne (10) par le réseau fixe (7) et le réseau mobile(13) ainsi que par des lignes (6) ou une liaison (14), **caractérisé en ce qu'**il existe, grâce à des procédures de connexion dûment installées, des moyens de reconnaissance du profil d'exigences mobile du client se connectant.

6. Système selon la revendication 5, **caractérisé en ce que** les équipements terminaux (9) du réseau fixe (7) sont équipés comme équipements terminaux pour services en ligne.

7. Système selon la revendication 5, **caractérisé en ce que** les équipements terminaux (16 à 18) du réseau mobile (13) sont configurés comme équipements terminaux (16) présentant un écran d'affichage multifonctionnel avec modem intégré (17), logiciel en ligne intégré et décodeur en ligne intégré ainsi que clavier élargi ou modems pour service de message court (18) avec logiciel et décodeur en ligne.

8. Système selon l'une des revendications 5 à 7, **caractérisé en ce que** les services en ligne (1) comportent des banques de données (2) et des accès à Internet (3) ainsi que des facilités d'accès ou de sauvegarde pour d'autres services (4) et **en ce que** le service mobile en ligne (10) comprend des banques de données structurées (11), des accès Internet (3) et des services de messages courts (SMS) (12).

9. Système selon l'une des revendications 5 à 8, **caractérisé en ce qu'**il consiste en des équipements terminaux (16) présentant un écran d'affichage multifonctionnel ou un portable avec fonctionnalité message court (18) plus services en ligne (1) structurés pour besoins mobiles.
